# EUROPEAN PATENT SPECIFICATION

(11) **EP 1 666 699 B1**
(45) Date of publication and mention of the grant of the patent: **19.12.2007**
(21) Application number: 05110164.0
(22) Date of filing: 28.10.2005
(51) Int. Cl.: F01D 13/00, F01K 17/02, F01D 15/10

(54) **Combined cycle power plant with gas and steam turbo groups**
Kombikraftwerk mit Dampfturbinen- und Gasturbinengroupen
Centrale à cycle combiné avec des groupes de turbines à gaz et de turbines à vapeur

(30) Priority: 29.10.2004 IT TO20040758
(43) Date of publication of application: 07.06.2006
(73) Proprietor: ANSALDO ENERGIA S.P.A., 16152 Genova (IT)
(72) Inventor: Falavigna, Loris, 16143 Genova (IT); Torre Alberto, 16146 Genova (IT)
(74) Representative: Jorio, Paolo

(56) References cited:
- DE-A1- 10 244 334
- DE-B- 1 007 780
- US-A- 4 316 362
- PATENT ABSTRACTS OF JAPAN vol. 008, no. 087 (M-291), 20 April 1984 (1984-04-20) & JP 59 003104 A (TOKYO SHIBAURA DENKI KK), 9 January 1984 (1984-01-09)
- PATENT ABSTRACTS OF JAPAN vol. 004, no. 120 (M-028), 26 August 1980 (1980-08-26) & JP 55 078105 A (TOSHIBA CORP), 12 June 1980 (1980-06-12)
- PATENT ABSTRACTS OF JAPAN vol. 004, no. 120 (M-028), 26 August 1980 (1980-08-26) & JP 55 078107 A (HITACHI LTD), 12 June 1980 (1980-06-12)

## Description

The present invention relates to a method for obtaining the functional reconversion in combined cycle of pre-existing pairs of turbo groups.

The invention also relates to a plant for producing energy by means of at least one pair of steam turbines operating in a configuration known as 'cross-compound', that is each turbine is arranged on a separate axis and operates its own generator.

It is known that 'combined cycle' means a thermal cycle in which, for producing energy, the gas turbine-using technology is paired with the steam turbine-using technology, for example, using the exhaust gases from a turbo gas to obtain, in a boiler, the generation of the steam needed to power one or more steam turbo groups (that is groups formed by a steam turbine and by a respective electric generator splined on the same axis). In this manner, the thermal energy to the exhaust of the turbo gas cycle is almost integrally recovered, increasing the energy output of the plant.

In the case of transforming a traditional combined cycle plant, the systems for generating energy in combined cycle, although in theory advantageous, present the drawback of having to adapt the thermo-dynamic cycle of the steam generator(s) with respect to a traditional steam cycle, in particular eliminating the 'bleedings' of steam from the sections at high, medium and low pressure of the steam turbo group which, in a combined cycle, where the thermal energy feeding the boiler for producing steam derives integrally from the turbo gas cycle upstream, not only would be not necessary, but they would even be disadvantageous.

Moreover, in the combined cycles there may be one or more re-admissions of steam along the turbine itself.

Consequently, in the low pressure section of the turbo group(s) a flow rate of steam greater (by about 20%) than that envisaged by traditional steam thermal cycles is supplied, with the same flow rate of incoming steam, with a consequent considerable reduction in output, in particular due to the considerable increase in energetic losses in the exhaust and the parallel reduction in the degree of vacuum guaranteed by the condenser to the exhaust.

In the case of new plants, this makes it necessary to design steam turbo groups specifically envisaged for use in combined cycles, having sections at low pressure and larger condensers; moreover, in the much more common case of transformation of old thermoelectric plants with conventional steam cycles, this also makes it necessary to either replace the pre-existing steam turbo group, or to reuse it only after complex and expensive modifications to the low pressure section and condenser thereof, work that, moreover, does not guarantee optimal results in terms of energy output.

What is more, in the very common case, of the presence in the traditional plant to be converted of two steam turbo groups of similar size, one of such turbo groups is normally destined either to be eliminated or to be used as a reserve, with further economic outlay.

DE 1007780 discloses a steam turbine plant where the flow of the steam leaving the medium pressure section of the first turbine is sent after treating in a heat exchanger, exclusively to the low pressure section of the first turbine.

The object of the present invention is to offer a method for carrying out the conversion of a traditional steam cycle thermoelectric plant based on a pair of steam turbo groups of similar size, in a combined cycle plant, by means of the addition of at least one turbo gas generator, which is free from the described drawbacks and which, in particular, makes it possible to obtain the needed adaptation of the steam turbo groups present with relatively low investments, in a short time frame, in a simple manner, and at the same time attaining an optimal rate energy output.

It is also the object of the invention to provide a plant for producing energy that is simple and economic to construct, in particular in the case of reconversion of a pre-existing traditional steam cycle plant into a combined cycle plant, extremely reliable and simple to start.

According to the invention, therefore, a method is provided for obtaining the functional reconversion in combined cycle of pairs of pre-existing steam turbo groups as defined in claim 1.

According to the invention, it is also described a plant for producing energy by means of at least one pair of steam turbines operating in 'cross-compound' configuration, according to claim 8.

In particular, in the plant according to the invention, a medium pressure section of a first steam turbine, which is hydraulically connected in series downstream of a high pressure section of the same, is hydraulically connected in cascade, respectively, with a low pressure section of the first steam turbine, by means of a first pipeline and, in parallel, with a low pressure section of a second steam turbine, by means of a second pipeline arranged in offtake to the first.

Here and below, the term 'hydraulically connected' means a connection that allows a fluid (whether liquid, or as in the present case, gaseous, or in the form of steam) to flow between the connected elements. Similarly, as will be shown, the terms 'upstream' and 'downstream' refer to the direction of the flow of such fluid.

The first and the second turbines are connected respectively to a first and a second electric generators through a first and a second axis, reciprocally independent, and the second electric generator being activated exclusively by the low pressure section of the second steam turbine.

Such a plant is constructed using the method of the invention, which envisages a step of disabling a high pressure section and a medium pressure section of the second steam turbine, and a step of hydraulically connecting in cascade the medium pressure section of the first steam turbine with the low pressure section of the first steam turbine and, in parallel, with the low pressure section of the second steam turbine by means of installing, in offtake to a first pipeline hydraulically connecting in cascade the medium pressure section of the first steam turbine with the low pressure section thereof, a second pipeline hydraulically connected in cascade with the low pressure section of the second steam turbine.

The step of disabling the sections of high and medium pressure of the second steam turbine is carried out by isolating it from the second axis and, possibly, removing it.

In this manner, it is possible to simply and reliably construct, beginning with a pair of pre-existing steam turbines, a plant for producing energy which presents a wholly innovative cross-compound configuration and which is particularly suitable for operating in combined cycle with a gas turbine.

The advantages with respect to the known art are as follows:
- output and power produced with the steam thermal cycle higher than solutions which envisage adaptating only one turbine and, in any case, operating on only one axis;
- lower costs with respect to solutions that envisage replacing the pre-existing turbines with only one turbine of larger size and, again, operating on only one axis;
- in the case of failure of one of the two sections at low pressure or of a generator, the possibility of continuing to operate by simply positioning blind flanges upstream of the failed section and a possible mechanical disconnection of the rotor flange.

Finally, the plant and the method of the invention make it possible to start the plant in combined cycle in a simple and quick manner, controlling with sufficient precision the speed of the two axes by means of a few regulating valves and making use of the steam available immediately after the gas turbine is started.

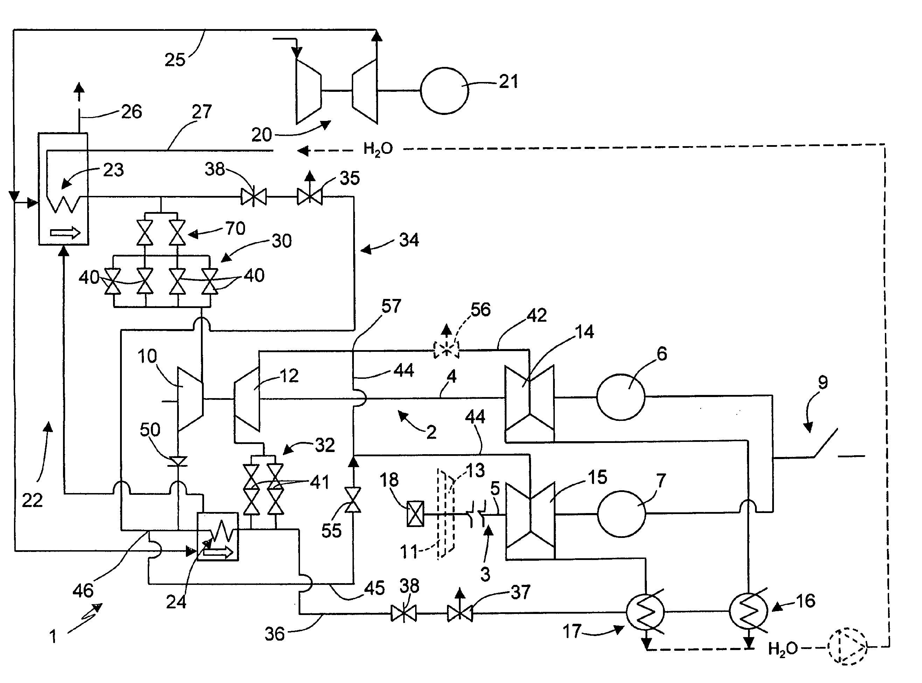

Further objects and advantages of the invention will become clear from the following description of a non-limitative example thereof, merely provided by way of example and with reference to the accompanying figure of the drawings, which schematically illustrates a plant for producing energy in combined cycle, in cross-compound configuration on two axes.

With reference to the above mentioned sole figure, it is indicated as a whole by 1 a plant for producing electrical energy by means of at least one pair of steam turbines 2, 3 of similar size, operating in 'cross-compound' configuration; in particular the plant 1 comprises a first steam turbine 2 which is coupled on a first axis 4 with a first electric generator 6, and a second steam turbine 3 which is coupled on a second axis 5 with a second electric generator 7; the generators 6, 7 are then connected in a known manner, and in any case obvious for those skilled in the art, to an electrical power supply 9.

The turbine 2 comprises a high pressure section 10, a medium pressure section 12 and a low pressure section 14, all reciprocally hydraulically connected in cascade; downstream of the low pressure section 14 being arranged a known condenser 16.

Here and below, the terms 'upstream' and 'downstream' refer to the direction of the flow of the operating fluid (steam) in the plant 1, schematically indicated by the arrows in the figure.

The turbine 3 comprises a high pressure section 11 and a medium pressure section 13, only schematically indicated in dotted lines in the figure, and a low pressure section 15, downstream of which is hydraulically arranged in series a condenser 17.

According to one aspect of the invention, the sections 11 and 13 have been hydraulically isolated and possibly removed from the axis 5, so as to make them unusable; moreover, to mechanically compensate for their absence, the axis 5 is provided with an axial bearing 18 (or other equivalent thrust bearing), for example installed on the part of the axis 5 freed by the removal of the sections 11 and 13, so as not to cause any increasing in the original dimensions of the turbine 3.

The illustrated plant 1 is a combined cycle plant and further comprises at least one gas turbine 20, which activates a respective electric generator 21, a boiler 22 for producing steam comprising at least one superheating member 23 and at least one resuperheating member 24, consisting of tube nests arranged within a single housing to form the boiler 22 (in the accompanying figure the boiler 22 has been schematically represented apparently divided into two elements 23, 24 to merely simplify the layout of the hydraulic connections and, therefore, to facilitate understanding of the figure itself), and a pipeline 25 to supply exhaust gas from the gas turbine 20 to the boiler 22 so as to supply thermal energy to the same.

The boiler 22 presents an exhaust chimney 26 for the exhaust gases of the gas turbine 20, and water inlet means 27 for the generation of superheated steam in the elements 23 and 24, which generally work in closed cycle, in a known manner, with the condensers 16 and 17, as schematically shown by dotted lines in the drawing.

The plant 1 also comprises a first hydraulic circuit branch 30 for connecting the superheating member 23 with the high pressure section 10 of the steam turbine 2, a second hydraulic circuit branch 32 to connect the high pressure section 10 with the medium pressure section 12 of the steam turbine 2, along which branch 32 the resuperheating member 24 is hydraulically inserted in series; first by-pass means (consisting of a pipeline 34) hydraulically arranged in parallel with the hydraulic circuit branch 30 to connect the superheating member 23 with the branch 32, upstream of the resuperheating member 24, through a first choke valve 35; and second by-pass means (consisting of a pipeline 36) hydraulically arranged in parallel to the second branch 32 (in this case an offtake from the same immediately downstream of the resuperheating member 24) to connect the resuperheating member 24 with at least one of the condensers 16, 17 through a second choke valve 37.

The valves 35 and 37, in order to facilitate the start-up stage of the plant 1, are regulating (in the sense that it is possible to regulate the throttling, as well as the complete opening/closing) and can be provided with gate valves 38 upstream which serve the purpose of isolating the pipelines 34, 36 when it is necessary to isolate the by-pass means following a leak, because of a failure, of the regulating valves 35, 37.

The branch 30 is preferably provided with a plurality of respective regulating valves 40 arranged parallel to each other, while downstream of the resuperheating member 24 and upstream of the medium pressure section 12 on the branch 32 a plurality of intercepting valves 41 is envisaged, also arranged parallel to each other, the by-pass pipeline 36 coupling in offtake in the branch 32 upstream of the intercepting valves 41.

The medium pressure section 12 of the turbine 2 is connected in a known manner with the low pressure section 14 of the same turbine 2 by means of a first pipeline 42.

According to the invention, moreover, the medium pressure section 12 of the turbine 2 is also connected, in parallel, with the low pressure section 15 of the second steam turbine 3, in this case by means of a second pipeline 44 arranged in offtake to the first pipeline 42; the sections 11 and 13 of the turbine 3 not being operative, in accordance with the above description, the electric generator 7 is, therefore, according to the invention, operated exclusively by the low pressure section 15 of the steam turbine 3.

According to the invention, the plant 1 also comprises a third pipeline 45 to connect the pipeline 44 with the hydraulic circuit branch 32, upstream of the resuperheating member 24, in this case in correspondence with a junction 46 in which the pipeline 34 also converges, so that the pipeline 45 is directly connected to the first by-pass means defined by the pipeline 34 itself. The pipeline 45 is used in the start-up step of the plant 1, as it will be seen.

A non-return valve 50 is arranged, according to a preferred aspect of the invention, in series along the hydraulic circuit branch 32, immediately downstream of the high pressure section 10 and upstream of the connection junction 46 of the first by-pass means 34 to the pipeline 45 and to the branch 32 itself.

Finally, the plant 1 illustrated comprises a first valve 55 (possibly regulating) arranged in series on the pipeline 45 and a second valve 56 (also possibly regulating and which is shown by dotted lines, since it is not strictly necessary, and which can therefore be omitted) arranged in series on the pipeline 42, downstream of a junction 57 in offtake from the pipeline 44 to the pipeline 42.

According to the method of the invention, the plant 1 is obtained by functional reconversion in combined cycle with the gas turbine 20 of a pair of pre-existing steam turbo groups of similar size, such as for example the two groups respectively formed of the turbine 2, with the axis 4 and the generator 6, and of the turbine 3 with the axis 5 and the generator 7, which are reciprocally coupled in an innovative 'cross-compound'-type configuration.

The method of the invention, in fact, comprises a step of disabling the high and medium pressure sections of one of the two turbo groups present, in this case of the sections 11 and 13 of the turbine 3, and a step of hydraulically connecting in cascade the medium pressure sections of the other turbo group, in this case the section 12 of the turbine 2, with the remaining low pressure section of the first turbo group, in this case the section 15 of the turbine 3, which is thus connected to the section 12 in parallel with the section 14, while being on a different axis from the axis 4, in this case the axis 5.

The stage of disabling the sections 11 and 13 is preferably carried out by mechanically removing the same (that is the corresponding rotors) from the axis 5; it would be possible to obtain a similar result only by hydraulically isolating the same, so as to make them inoperative in any case.

Subsequently, to carry out the above mentioned step of hydraulically connecting in cascade the section 12 with the section 15, it is necessary to modify the pre-existing plant by installing the pipeline 44 in offtake to the pipeline 42.

Finally, the transformation of the pre-existing plant into the plant 1 is completed by a step of prearranging the needed means for producing, in a combined cycle with the gas turbine 20, the start-up of the turbines 2 and 3.

Such a step envisages installing by-pass means respectively for the high pressure section 10 and the medium pressure section 12 of the steam turbine 2, which is effected by: installing and connecting the pipelines 34 and 36, with the relative valves 35, 37; installing, immediately upstream of the resuperheating member 24, of the non-return valve 50 hydraulically in series with the hydraulic connecting pipelines in cascade between the sections 10 and 12, defining the hydraulic circuit branch 32; and installing the pipeline 45 with the valve 55.

Finally, preferably the valve 56 is also hydraulically installed in series on the pipeline 42, downstream of the junction 57.

It must be noted that the step of disabling the high and medium pressure sections 11, 13 of the second steam turbine 3 necessarily involves installing on the second axis 5 the axial thrust bearing 18 or other equivalent thrust bearing, to balance the axial reaction that produces in use the flow of steam crossing the rotor of the remaining section 15.

On the basis of the above description it is evident that to obtain the plant 1 starting from a traditional plant based only on the turbines 2 and 3 it is necessary to carry out only limited, very simple and inexpensive work, apart from the installation *ex novo* of the gas turbine 20. Thanks to the structure of the plant described, moreover, the start-up of the plant 1 is particularly simple, rapid and reliable.

In effect, the gas turbine 20 will be started by beginning to produce energy through the generator 21 and the valves 35, 37 will open (the valves 38, if present, are always open, except when emergency conditions occur), leaving the valves 40, 41 (or possible respective emergency valves 70 arranged upstream of these) closed, so as to activate the by-passes 34 and 36.

In this step the turbines 2, 3 are inactive and the flow of steam that begins to be generated by the boiler 22, crossed by the hot exhaust gases of the turbine 20, cannot enter and remains trapped in the section 10 thanks to the presence of the valve 50.

Subsequently, the valve 55 is partially opened allowing part of the 'cold' steam that has undergone, in a known manner, a first expansion and "tempering" (water injection) through the valve 35, but which has not yet passed through the resuperheating member 24, to be fed to both the low pressure sections 14 and 15 of the turbines 2 and 3; the axes 4 and 5 begin to rotate turning over the generators 6 and 7.

Again subsequently, the valves 41 partially open, allowing part of the steam to reach the medium pressure section 12, which produces greater acceleration of the axis 4 with respect to 5, in order to reach about the same speed on the two axes 4, 5 before paralleling (in a known manner) the generators 6, 7 which occurs at a rotation speed lower than nominal.

Once a sufficient quantity of steam has been obtained in the boiler 22, the valves 40, 41 are opened and, at the same time, the valves 35, 37 are completely closed, bringing them into operating configuration; once transient start-up has ceased, that is when the plant 1 is in a steady state, the valve 56 is useful for equalling the flow rates of steam towards the low pressure sections 14 and 15 of the two axes 4, 5.

In fact, assuming that the pipeline 42 is, for obvious reasons of layout, shorter than the pipeline 44, there would be a greater flow rate of steam towards the low pressure section 14 of the axis 4 with respect to the low pressure section 15 of the axis 5 (due to the lower load losses resulting from the shorter length).

Therefore by adequately throttling the valve 56 (once, that is with an *una tantum* manual operation which it is not necessary to be repeated during normal operation of the plant 1), so that the load loss along the shorter pipeline 42 is adequately increased, the perfect equalisation of the flow rates will be obtained; it will be possible to check the obtaining of such an equalisation in a simple manner, by a mere reading of the steam pressures downstream.

## Claims

1. A method for obtaining the functional reconversion in combined cycle of a pair of pre-existing steam turbo groups, wherein at least one pair of said steam turbo groups, a first of which comprising a first steam turbine (2) and a first electric generator (6) connected on a first common axis (4) and a second of which comprising a second steam turbine (3) and a second electric generator (7) connected on a second common axis (5), are reciprocally coupled in a 'crosscompound' type configuration; **characterised in that** it comprises at least:
- one step of disabling a high pressure section (11) and a medium pressure section (13) of the second steam 15 turbine (3) ; and
- a step of hydraulically connecting in cascade a medium pressure section (12) of the first steam turbine (2), hydraulically connected in series downstream of a high pressure section (10) of the same first steam turbine, with a low pressure section (14) of the first steam turbine (2) and, in parallel and directly, with a low pressure section (15) of the second steam turbine (3);
so that the second electric generator (7) is exclusively operated by the low pressure section (15) of the second steam turbine.

2. A method according to claim 1, **characterised in that** said step of disabling said high and medium pressure sections of the second steam turbine (3) is carried out by mechanically removing the same from said second axis (5), or by hydraulically isolating the same.

3. A method according to claim 1 or 2 **characterised in that** said step of hydraulically connecting in cascade the medium pressure section of the steam turbine (2) with the low pressure section of the second steam turbine (3) is carried out by installing, in offtake to a first pipeline (42) hydraulically connecting in cascade said medium pressure section (12) of the first steam turbine (2) with said low pressure section (14) of the same, a second pipeline (44) hydraulically coupled in cascade with said low pressure section (15) of the second steam turbine (3).

4. A method according to claim 3, **characterised in that** the thermal energy needed for operating said first and second steam turbines (2; 3) is produced by feeding exhaust gases from a gas turbine (20) to a boiler (22) for supplying said first and second steam turbines, equipped with at least one superheating member (23) and at least one resuperheating member (24), reciprocally arranged in cascade.

5. A method according to claim 4, **characterised in that** it comprises a step of prearranging means for the startup of said first and second steam turbines including first by-pass means (34) for the high pressure section (10) of the first steam turbine (2) and second by-pass means (36) for the medium pressure section (12) of the first steam turbine (2); said step of prearranging comprising:
- installing a non-return valve (50) hydraulically in series to a hydraulic circuit branch (32) of a hydraulic connection in cascade between the high (10) and medium (12) pressure sections of the first steam 10 turbine (2), installation which is carried out immediately upstream of said resuperheating member (24); and
- installing a third pipeline (45) hydraulically connecting said second pipeline (44) with said hydraulic circuit branch (32) connecting the high and medium pressure sections of the first steam turbine (2); and a first valve (55) hydraulically in series on said third pipeline (45).

6. A method according to claims from 3 to 5, **characterised in that** it envisages installing a second valve (56) hydraulically in series along said first pipeline (42) and downstream of a connecting junction (57) in offtake of said second pipeline (44) to the first pipeline (42).

7. A method according to one of the previous claims, **characterised in that** said step of disabling the high and medium pressure sections of the second steam turbine (3) requires installing an axial bearing or a thrust bearing (18) on said second axis (5).

8. A plant (1) for producing energy by means of at least one pair of steam turbines (2, 3) operating in 'crosscompound' configuration, wherein a first steam turbine (2) is coupled on a first axis (4) with a first electric generator (6), and a second steam turbine (3) is coupled on a second axis (5) with a second electric generator (7), **characterised in that** a medium pressure section (12) of the first steam turbine (2), which is hydraulically connected in series downstream of a high pressure section (10) of the first steam turbine, results hydraulically connected in cascade, respectively, with a low pressure section (14) of the first steam turbine (2) by means of a first pipeline (42) and, in parallel and directly, with a low pressure section (15) of the second steam turbine (3) by means of a second pipeline (44) arranged in offtake to the first (42); the second electric generator (7) being activated exclusively by said low pressure section (15) of the second steam turbine.

9. A plant according to claim 8, **characterised in that** a high pressure section (11) and a medium pressure section (13) of the second steam turbine (3) are hydraulically isolated or possibly removed.

10. A plant according to claim 8 or 9, **characterised in that** it is of a combined cycle, further comprising at least one gas turbine (20), a boiler (22) for producing steam comprising in turn at least one superheating member (23) and at least one resuperheating member (24), and a pipe (25) for feeding exhaust gas from the gas turbine (20) to said boiler (22) in order to supply thermal energy to the same.

11. A plant according to claim 10, **characterised in that** it comprises:
- a first hydraulic circuit branch (30) to connect said superheating member (23) with said high pressure section (10) of the first steam turbine, said first hydraulic circuit branch (30) being provided with a plurality of regulating valves (40) reciprocally arranged in parallel;
- a second hydraulic circuit branch (32) to connect said high pressure section (10) and said medium pressure section (12) of the first steam turbine (2), along which said resuperheating member (24) is installed in series; downstream of the resuperheating member (24) and upstream of said medium pressure section (12) a plurality of intercepting valves (41) being envisaged reciprocally arranged in parallel;
- first by-pass means (34) hydraulically arranged in paraliel to said first hydraulic circuit branch (30) to connect said superheating member (23) with said second hydraulic circuit branch (32), upstream of said resuperheating member (24), by means of a first choke valve (35);
- second by-pass means (36) hydraulically arranged in parallel to said second hydraulic circuit branch (32) to connect, upstream of said intercepting valves (41) said resuperheating member (24) with at least one condenser (17) through a second choke valve (37);
- a third pipeline (45) for connecting said second pipeline (44) with said second hydraulic circuit branch (32), upstream of said resuperheating member (24), so that said third pipeline (45) is directly connected to said first by-pass means (34);
- a non-return valve (50) arranged in series along said 15 second hydraulic circuit branch (32) immediately downstream of said high pressure section (10) of the first steam turbine (2) and upstream of a connecting junction (46) of said first by-pass means (34) to said second hydraulic circuit branch (32) and said third pipeline (45).

12. A plant according to claim 11, **characterised in that** it further comprises a first valve (55) arranged in series on said third pipeline (45) and a second valve (56) arranged in series on said first pipeline (42) downstream of a connecting junction (46) in offtake (57) of said second pipeline (44) to the first pipeline (42).

13. A plant according to claim 11 or 12, **characterised in that** it comprises a first (16) and a second (17) condensers, connected downstream to said low pressure sections (14; 51) of respectively said first (2) and second (3) steam turbines.

## Patentansprüche

1. Verfahren zum Erlangen der funktionalen Umwandlung in einen kombinierten Ablauf eines Paares von vorher vorhandenen Dampfturbogruppen, bei welchem wenigstens ein Paar der Dampfturbogruppen, wobei eine erste von diesen eine erste Dampfturbine (2) und einen ersten elektrischen Generator (6) an einer gemeinsamen ersten Achse (4) verbunden umfasst, und wobei eine zweite von diesen eine zweite Dampfturbine (3) und einen zweiten elektrischen Generator (7) an einer zweiten gemeinsamen Achse (5) verbunden umfasst, wechselseitig in einer "Querverbund"-artigen Konfiguration gekoppelt sind; **dadurch gekennzeichnet, dass** es wenigstes umfasst:
- einen Schritt des Deaktivierens eines Hochdruckabschnitts (11) und eines Mitteldruckabschnitts (13) der zweite Dampfturbine (3); und
- einen Schritt des hydraulischen Verbindens in Kaskade eines Mitteldruckabschnitts (12) der erste Dampfturbine (2), die hydraulisch in Reihe stromabwärts eines Hochdruckabschnitts (10) derselben ersten Dampfturbine verbunden ist, mit einem Niedrigdruckabschnitt (14) der ersten Dampfturbine (2) und, parallel und direkt, mit einem Niedrigdruckabschnitt (15) der zweiten Dampfturbine (3);
sodass der zweite elektrische Generator (7) ausschließlich durch den Niedrigdruckabschnitt (15) der zweiten Dampfturbine betrieben wird.

2. Verfahren nach Anspruch 1, **dadurch gekennzeichnet, dass** der Schritt des Deaktivierens des Hoch- und Mitteldruckabschnitts der zweiten Dampfturbine (3) durch mechanisches Entfernen derselben von der zweiten Achse (5) oder durch hydraulisches Isolieren derselben ausgeführt wird.

3. Verfahren nach Anspruch 1 oder 2, **dadurch gekennzeichnet, dass** der Schritt des hydraulischen Verbindens in Kaskade des Mitteldruckabschnitts der Dampfturbine (2) mit dem Niedrigdruckabschnitt der zweiten Dampfturbine (3) ausgeführt wird durch Installieren, in einer Ableitung zu einer ersten Leitung (42), die in Kaskade den Mitteldruckabschnitt (12) der erste Dampfturbine (2) mit dem Niedrigdruckabschnitt (14) derselben hydraulisch verbindet, einer zweiten Leitung (44), die hydraulisch in Kaskade mit dem Niedrigdruckabschnitt (15) der zweiten Dampfturbine (3) gekoppelt ist.

4. Verfahren nach Anspruch 3, **dadurch gekennzeichnet, dass** die thermische Energie, die für den Betrieb der ersten und zweiten Dampfturbine (2; 3) benötigt wird, durch Leiten von Abgasen von einer Gasturbine (20) an einen Erhitzer (22) erzeugt wird, um die erste und zweite Dampfturbine zu versorgen, ausgestattet mit wenigstens einem Überhitzungsglied (23) und wenigstens einem Rücküberhitzungsglied (24), die wechselseitig in Kaskade angeordnet sind.

5. Verfahren nach Anspruch 4, **dadurch gekennzeichnet, dass** es einen Schritt des Voranordnens von Mitteln für die Inbetriebnahme der ersten und zweiten Dampfturbine umfasst, einschließlich eines ersten Umgehungsmittels (34) für den Hochdruckabschnitt (10) der ersten Dampfturbine (2) und ein zweites Umgehungsmittel (36) für den Mitteldruckabschnitt (12) der ersten Dampfturbine (2); wobei der Schritt des Voranordnens umfasst:
- Installieren eines Sperrventils (50) hydraulisch in Reihe mit einem hydraulischen Abzweigkreis (32) einer hydraulischen Verbindung in Kaskade zwischen dem Hoch- (10) und Mittel-(12)-Druckabschnitten der ersten Dampfturbine (2), wobei die Installation gleich stromaufwärts des Rücküberhitzungsglieds (24) ausgeführt wird; und
- Installieren einer dritten Leitung (45), die hydraulisch die zweite Leitung (44) mit dem hydraulischen Abzweigkreis (32) verbindet, der die Hoch- und Mitteldruckabschnitte der ersten Dampfturbine (2) verbindet; und eines ersten Ventils (55) hydraulisch in Reihe an der dritten Leitung (45).

6. Verfahren nach Ansprüchen 3 bis 5, **dadurch gekennzeichnet, dass** es das Installieren eines zweiten Ventils (56) hydraulisch in Reihe entlang der ersten Leitung (42) und stromabwärts eines Verbindungsanschlusses (57) in einer Ableitung der zweiten Leitung (44) zu der ersten Leitung (42) vorsieht.

7. Verfahren nach einem der vorhergehenden Ansprüche, **dadurch gekennzeichnet, dass** der Schritt des Deaktivierens der Hoch- und Mitteldruckabschnitte der zweiten Dampfturbine (3) das Installieren eines Axiallagers oder eines Stützlagers (18) an der zweiten Achse (5) erfordert.

8. Anlage (1) zum Erzeugen von Energie durch wenigstens ein Paar Dampfturbinen (2, 3), die in einer "Querverbund"-Konfiguration betrieben werden, bei welchem eine erste Dampfturbine (2) an einer ersten Achse (4) mit einem ersten elektrischen Generator (6) gekoppelt ist, und eine zweite Dampfturbine (3) an einer zweiten Achse (5) mit einem zweiten elektrischen Generator (7) gekoppelt ist, **dadurch gekennzeichnet, dass** ein Mitteldruckabschnitt (12) der ersten Dampfturbine (2), die hydraulisch in Reihe stromabwärts eines Hochdruckabschnitts (10) der ersten Dampfturbine verbunden ist, zu einer hydraulischen Verbindung in Kaskade führt bzw. mit einem Niedrigdruckabschnitt (14) der ersten Dampfturbine (2) durch eine erste Leitung (42) und, parallel und direkt, mit einem Niedrigdruckabschnitt (15) der zweiten Dampfturbine (3) durch eine zweite Leitung (44), die in der Ableitung zu der ersten (42) angeordnet ist; wobei der zweite elektrische Generator (7) ausschließlich durch den Niedrigdruckabschnitt (15) der zweiten Dampfturbine aktiviert wird.

9. Anlage nach Anspruch 8, **dadurch gekennzeichnet, dass** ein Hochdruckabschnitt (11) und ein Mitteldruckabschnitt (13) der zweiten Dampfturbine (3) hydraulisch isoliert sind oder möglicherweise entfernt sind.

10. Anlage nach Anspruch 8 oder 9, **dadurch gekennzeichnet, dass** sie einen kombinierten Ablauf hat, ferner wenigstens eine Gasturbine (20), einen Erhitzer (22) zum Erzeugen von Dampf, der wiederum wenigstens ein Überhitzungsglied (23) und wenigstens ein Rücküberhitzungsglied (24) umfasst, und eine Leitung (25) umfassend, zum Leiten von Abgas von der Gasturbine (20) an den Erhitzer (22), um selbigen mit thermischer Energie zu versorgen.

11. Anlage nach Anspruch 10, **dadurch gekennzeichnet, dass** sie umfasst:
- einen ersten hydraulischen Abzweigkreis (30), um das Überhitzungsglied (23) mit dem ersten Hochdruckabschnitt (10) der ersten Dampfturbine zu verbinden, wobei der erste hydraulische Abzweigkreis (30) mit mehreren Regelventilen, die wechselseitig parallel angeordnet sind, ausgestattet ist;
- einen zweiten hydraulischen Abzweigkreis (32), um den Hochdruckabschnitt (10) und den Mitteldruckabschnitt (12) der ersten Dampfturbine (2) zu verbinden, wobei entlang dieser das Rücküberhitzungsglied (24) in Reihe installiert ist; wobei stromabwärts des Rücküberhitzungsglieds (24) und stromaufwärts von dem Mitteldruckabschnitt (12) mehrere Abfangventile (41) vorgesehen sind, die wechselseitig parallel angeordnet sind;
- ein erstes Umgehungsmittel (34), das parallel hydraulisch zu dem ersten hydraulischen Abzweigkreis (30) angeordnet ist, um das Überhitzungsglied (23) mit dem zweiten hydraulischen Abzweigkreis (32), stromaufwärts des Rücküberhitzungsglieds (24), durch ein erstes Drosselventil (35) zu verbinden;
- ein zweites Umgehungsmittel (36), das parallel hydraulisch zu dem zweiten hydraulischen Abzweigkreis (32) angeordnet ist, um stromaufwärts des Abfangventils (41) des Rücküberhitzungsglieds (24) mit wenigstens einem Kondensator (27) durch ein zweites Drosselventil (27) zu verbinden;
- eine dritte Leitung (45) zum Verbinden der zweiten Leitung (44) mit dem zweiten hydraulischen Abzweigkreis (32) stromaufwärts des Rücküberhitzungsglieds (24), sodass die dritte Leitung (45) direkt mit dem ersten Umgehungsmittel (34) verbunden ist;
- ein Sperrventil (50), das in Reihe entlang des zweiten hydraulischen des zweiten hydraulischen Abzweigkreises (32) gleich stromabwärts des Hochdruckabschnitts (10) der ersten Dampfturbine (2) angeordnet ist und stromaufwärts eines Verbindungsanschlusses (46) des erste Umgehungsmittels (34) zu dem zweiten hydraulischen Abzweigkreis (32) und der dritten Leitung (45).

12. Anlage nach Anspruch 11, **dadurch gekennzeichnet, dass** sie ferner ein erstes Ventil (55) umfasst, das in Reihe an der dritten Leitung (45) angeordnet ist, und ein zweites Ventil (56), das in Reihe an der ersten Leitung (42) stromabwärts eines Verbindungsanschlusses (46) in der Ableitung (57) der zweiten Leitung (44) zu der ersten Leitung (42) angeordnet ist.

13. Anlage nach Anspruch 11 oder 12, **dadurch gekennzeichnet, dass** sie einen ersten (16) und einen zweiten (17) Kondensator umfasst, stromabwärts mit den Niedrigdruckabschnitten (14; 51) der ersten (2) bzw. zweiten (3) Dampfturbine verbunden.

## Revendications

1. Procédé d'obtention de la reconversion fonctionnelle en cycle combiné d'une paire de turbo-groupes à vapeur préexistants, dans lequel au moins une paire desdits turbo-groupes à vapeur, un premier comprenant une première turbine à vapeur (2) et un premier générateur électrique (6) raccordé sur un premier axe commun (4) et un second comprenant une seconde turbine à vapeur (3) et un second générateur électrique (7) raccordé sur un second axe commun (5), sont couplés de manière réciproque dans une configuration de type « à deux lignes d'arbres », **caractérisé en ce qu'**il comprend au moins :
- une étape de mise hors fonction d'une section haute pression (11) et d'une section moyenne pression (13) de la seconde turbine à vapeur 15 (3) ; et
- une étape de raccordement hydraulique en cascade d'une section moyenne pression (12) de la première turbine à vapeur (2), raccordée de manière hydraulique en série en aval d'une section haute pression (10) de la même première turbine, avec une section basse pression (14) de la première turbine à vapeur (2), et en parallèle et directement, avec une section basse pression (15) de la seconde turbine à vapeur (3) ;
de sorte que le second générateur électrique (7) soit exclusivement actionné par la section basse pression (15) de la seconde turbine à vapeur.

2. Procédé selon la revendication 1, **caractérisé en ce que** ladite étape de mise hors fonction desdites sections haute et moyenne pression de la seconde turbine à vapeur (3) est réalisée en retirant mécaniquement celles-ci dudit second axe (5), ou en les isolant hydrauliquement.

3. Procédé selon la revendication 1 ou 2, **caractérisé en ce que** ladite étape de raccordement hydraulique en cascade de la section moyenne pression de la turbine à vapeur (2) avec la section basse pression de la seconde turbine à vapeur (3) est réalisée en installant, en sortie par rapport à une première conduite (42) raccordant de manière hydraulique en cascade ladite section moyenne pression (12) de la première turbine à vapeur (2) à ladite section basse pression (14) de celle-ci, une deuxième conduite (44) couplée de manière hydraulique en cascade à ladite section basse pression (15) de la seconde turbine à vapeur (3).

4. Procédé selon la revendication 3, **caractérisé en ce que** l'énergie thermique nécessaire pour actionner lesdites première et seconde turbines à vapeur (2 ; 3) est produite en alimentant une chaudière (22) en gaz d'échappement depuis une turbine à gaz (20) pour alimenter lesdites première et seconde turbines à vapeur, équipées avec au moins un élément de surchauffe (23) et au moins un élément de resurchauffe (24) agencés réciproquement en cascade.

5. Procédé selon la revendication 4, **caractérisé en ce qu'**il comprend une étape consistant à agencer préalablement des moyens pour le démarrage desdites première et seconde turbines à vapeur, comprenant des premiers moyens de dérivation (34) pour la section haute pression (10) de la première turbine à vapeur (2) et des seconds moyens de dérivation (36) pour la section moyenne pression (12) de la première turbine à vapeur (2) ; ladite étape d'agencement préalable comprenant :
- l'installation d'une soupape de non-retour (50) de manière hydraulique en série sur une branche de circuit hydraulique (32) d'un raccordement hydraulique en cascade entre les sections haute (10) et moyenne (12) pression de la première turbine à vapeur 10 (2), installation qui est réalisée immédiatement en amont dudit élément de resurchauffe (24) ; et
- l'installation d'une troisième conduite (45) raccordée de manière hydraulique à ladite deuxième conduite (44) avec ladite branche de circuit hydraulique (32) raccordant les sections haute et moyenne pression de la première turbine à vapeur (2) ; et une première soupape (55) hydrauliquement en série sur ladite troisième conduite (45).

6. Procédé selon les revendications 3 à 5, **caractérisé en ce qu'**il prévoit l'installation d'une deuxième soupape (56) hydrauliquement en série le long de ladite première conduite (42) et en aval d'une jonction de raccordement (57) en sortie de ladite deuxième conduite (44) par rapport à la première conduite (42).

7. Procédé selon l'une quelconque des revendications précédentes, **caractérisé en ce que** ladite étape de mise hors fonction des sections haute et moyenne pression de la seconde turbine à vapeur (3) nécessite l'installation d'un palier axial ou d'un palier de butée (18) sur ledit second axe (5).

8. Centrale (1) destinée à produire de l'énergie au moyen d'au moins une paire de turbines à vapeur (2, 3) fonctionnant selon une configuration « à deux lignes d'arbre », dans laquelle une première turbine à vapeur (2) est couplée sur un premier axe (4) avec un premier générateur électrique (6), et une seconde turbine à vapeur (3) est couplée sur un second axe (5) avec un second générateur électrique (7), **caractérisée en ce qu'**une section moyenne pression (12) de la première turbine à vapeur (2), qui est hydrauliquement raccordée en série en aval d'une section haute pression (10) de la première turbine à vapeur, se trouve raccordée hydrauliquement en cascade, respectivement, avec une section basse pression (14) de la première turbine à vapeur (2) au moyen d'une première conduite (42) et, en parallèle et directement, avec une section basse pression (15) de la seconde turbine à vapeur (3) au moyen d'une deuxième conduite (44) agencée en sortie par rapport à la première (42) ; le second générateur électrique (7) étant activé exclusivement par ladite section basse pression (15) de la seconde turbine à vapeur.

9. Centrale selon la revendication 8, **caractérisée en ce qu'**une section haute pression (11) et une section moyenne pression (13) de la seconde turbine à vapeur (3) sont isolées hydrauliquement ou éventuellement retirées.

10. Centrale selon la revendication 8 ou 9, **caractérisée en ce qu'**elle est à cycle combiné, comprenant en outre au moins une turbine à gaz (20), une chaudière (22) pour produire de la vapeur comprenant à son tour au moins un élément de surchauffe (23) et au moins un élément de resurchauffe (24), et un tuyau (25) pour alimenter la chaudière (22) en gaz d'échappement depuis la turbine à gaz (20) afin de fournir de l'énergie thermique à cette dernière.

11. Centrale selon la revendication 10, **caractérisée en ce qu'**elle comprend :
- une première branche de circuit hydraulique (30) pour raccorder ledit élément de surchauffe (23) à ladite section haute pression (10) de la première turbine à vapeur, ladite première branche de circuit hydraulique (30) étant munie d'une pluralité de soupapes de régulation (40) agencées de manière réciproque en parallèle ;
- une deuxième branche de circuit hydraulique (32) pour raccorder ladite section haute pression (10) et ladite section moyenne pression (12) de la première turbine à vapeur (2), le long de laquelle ledit élément de resurchauffe (24) est installé en série ; en aval de l'élément de resurchauffe (24) et en amont de ladite section moyenne pression (12) une pluralité de soupapes de prélèvement (41) étant prévues de manière à être agencées réciproquement en parallèle ;
- un premier moyen de dérivation (34) agencé hydrauliquement de manière parallèle à ladite branche de circuit hydraulique (30) pour raccorder ledit élément de surchauffe (23) à ladite deuxième branche de circuit hydraulique (32), en amont dudit élément de resurchauffe (24), au moyen d'une première soupape d'étranglement (35) ;
- un deuxième moyen de dérivation (36) agencé hydrauliquement de manière parallèle à ladite deuxième branche de circuit hydraulique (32) pour raccorder, en amont desdites soupapes de prélèvement (41), ledit élément de resurchauffe (24) avec au moins un condensateur (17) à travers une deuxième soupape d'étranglement (37) ;
- une troisième conduite (45) pour raccorder ladite deuxième conduite (44) à ladite deuxième branche de circuit hydraulique (32), en amont dudit élément de resurchauffe (24), de sorte que ladite troisième conduite (45) soit directement raccordée audit premier moyen de dérivation (34) ;
- une soupape de non-retour (50) agencée en série le long de ladite deuxième branche de circuit hydraulique 15 (32) immédiatement en aval de ladite section haute pression (10) de la première turbine à vapeur (2) et en amont d'une jonction de raccordement (46) dudit premier moyen de dérivation (34) à ladite deuxième branche de circuit hydraulique (32) et à ladite troisième conduite (45).

12. Centrale selon la revendication 11, **caractérisée en ce qu'**elle comprend en outre une première soupape (55) agencée en série sur ladite troisième conduite (45) et une deuxième soupape (56) agencée en série sur ladite première conduite (42) en aval d'une jonction de raccordement (46), en sortie de ladite deuxième conduite (44) par rapport à la première conduite (42).

13. Centrale selon la revendication 11 ou 12, **caractérisée en ce qu'**elle comprend un premier (16) et un deuxième (17) condensateurs, raccordés en aval desdites sections basse pression (14 ; 51) desdites première (2) et deuxième (3) turbines à vapeur respectivement.
